# EUROPEAN PATENT APPLICATION

(11) **EP 2 874 345 A1**
(43) Date of publication of application: **20.05.2015**
(21) Application number: 12840832.5
(22) Date of filing: 06.09.2012
(51) Int. Cl.: H04L 9/32

(54) **METHOD FOR AUTHENTICATING TRUSTED PLATFORM-BASED OPEN ID, AND APPARATUS AND SYSTEM THEREFOR**

(30) Priority: 21.06.2012 KR 20120066646
(71) Applicant: SK Planet Co., Ltd., Seoul 100-999 (KR)
(72) Inventor: KIM, Do Wan, Seongnam-si Gyeonggi-do 463-779 (KR); KIM, Hyun Wook, Seongnam-si Gyeonggi-do 463-751 (KR); SHIN, Jung Keum, Seoul 137-947 (KR)
(74) Representative: Isarpatent
(86) International application number: PCT/KR2012/007144
(87) International publication number: WO 2013/191325

(57) **Abstract**

The present invention relates to open identification (ID) authentication technology and, more particularly, to a method, an apparatus and a system for authenticating an open ID based on a trusted platform so as to prevent network overload which may occur due to data transmission repeated at every time of open ID authentication. In an embodiment of this invention, an open ID authentication system includes a web service providing apparatus configured to provide a specific web service and to support a login of a user device in an open ID service procedure according to mutual arrangements with an open ID management apparatus, and the user device configured to have a separate environment formed of a non-security region operating based on an open operating system and a security region operating based on a security operating system, to access the web service provided by the web service providing apparatus through a web browser running in the non-security region, to transmit an open ID inputted through the web browser to the web service providing apparatus, to perform user authentication on the basis of a stored password corresponding to the open ID at the security region when a redirection message is received from the web service providing apparatus, and to transmit a user authentication success message to the web service providing apparatus through the web browser so as to conduct a login.

## Description

### Technical Field

The present invention relates generally to open identification (ID) authentication technology and, more particularly, to a method, an apparatus and a system for authenticating an open ID based on a trusted platform so as to prevent network overload which may occur due to data transmission repeated at every time of open ID authentication.

### Background Art

Normally a user who desires to use a specific web service has to conduct a process of joining to be a member at a web service provider that provides the specific web service. In this process, a user registers his or her personal information and is issued identification (ID).

As a great variety of web services are popularized explosively, the number of IDs and passwords a user should manages also increases. Therefore, a user not only has difficulty in managing numerous IDs and passwords, but also feels growing misgivings about leakage or abuse of personal information due to hacking into web service providers.

Recently open ID technology has been introduced. An open ID service allows a user to register his or her information in a certain site only and to access, using an open ID, any website that support a login based on an open ID service procedure.

This open ID service has advantages of allowing an access to any website through a single ID and password without separately joining to be a member and of preventing in advance leakage of personal information.

Additionally, a website may eliminate the need of separately constructing a complicated user management process.

However, an open ID service has a drawback of causing network overload in user authentication due to repeated data transmission among a user device, a web service providing apparatus for providing a web service, and an open ID management apparatus for supporting an open ID service.

Also, such repeated data transmission may result in waste of wireless resources in a wireless communication environment that uses limited wireless resources.

### Detailed Description of the Invention

### Technical Problems

Accordingly, one aspect of the present invention is to provide a method, apparatus and system for authenticating an open ID based on a trusted platform so as to prevent in advance network overload caused by repeated data transmission in open ID authentication.

Another aspect of the present invention is to provide an open ID authentication method, apparatus and system based on a trusted platform by employing a user device that has a separate environment formed of a non-security region based on an open operating system and a security region based on a security operating system and also by allowing the security region of the user device authorized by an open ID management apparatus to perform authentication for an open ID.

### Technical Solutions

One aspect of the present invention provides an open identification (ID) authentication system that includes a web service providing apparatus configured to provide a specific web service and to support a login of a user device in an open ID service procedure according to mutual arrangements with an open ID management apparatus; and the user device configured to have a separate environment formed of a non-security region operating based on an open operating system and a security region operating based on a security operating system, to access the web service provided by the web service providing apparatus through a web browser running in the non-security region, to transmit an open ID inputted through the web browser to the web service providing apparatus, to perform user authentication on the basis of a stored password corresponding to the open ID at the security region when a redirection message is received from the web service providing apparatus, and to transmit a user authentication success message to the web service providing apparatus through the web browser so as to conduct a login.

Another aspect of the present invention provides a user device that includes a communication unit configured to transmit or receive information through a communication network; and a control unit configured to have a separate environment formed of a non-security region operating based on an open operating system and a security region operating based on a security operating system, to access a web service provided by a web service providing apparatus through a web browser running in the non-security region, to transmit an open ID inputted through the web browser to the web service providing apparatus, to perform user authentication on the basis of a stored password corresponding to the open ID at the security region when a redirection message is received from the web service providing apparatus, and to transmit a user authentication success message to the web service providing apparatus through the web browser so as to conduct a login.

In the user device, the control unit may be further configured to transmit a user identification number of the user device to the web service providing apparatus when transmitting the open ID.

In the user device, the redirection message may contain authentication information that includes an address of an open ID management apparatus and at least one of open ID authentication information and user authentication authorization information, the open ID authentication information indicating whether the open ID is issued by the open ID management apparatus, and the user authentication authorization information indicating that user authentication is authorized by the open ID management apparatus.

In the user device, the control unit may be further configured, if the security region has a stored password corresponding to the open ID, to decrypt the password by using the user identification number so as to perform the user authentication.

In the user device, the control unit may be further configured, if the security region has no stored password corresponding to the open ID, to send a request for user authentication to the open ID management apparatus, to transmit a password inputted from a user at the request of the open ID management apparatus to the open ID management apparatus, and if a user authentication success message is received from the open ID management apparatus, to encrypt and store the password at the security region by using the user identification number.

Still another aspect of the present invention provides a web service providing apparatus that includes a service communication unit configured to communicate with an open ID management apparatus and at least one user device, the open ID management apparatus supporting an open ID service, and the user device having a separate environment formed of a non-security region operating based on an open operating system and a security region operating based on a security operating system; and a service control unit configured to identify an address of the open ID management apparatus on the basis of an open ID when the open ID is received from the non-security region of the user device, to inquire of the open ID management apparatus about authentication for the open ID, to transmit a redirection message containing authentication information and the address of the open ID management apparatus to the non-security region of the user device when the authentication information is received as the result of the authentication from the open ID management apparatus, and to permit a login of the user device when a user authentication success message is received from the non-security region of the user device.

Still another aspect of the present invention provides an open identification (ID) authentication method based on a trusted platform. The method includes steps of: at a user device, after accessing a web service provided by a web service providing apparatus through a web browser running in the non-security region, transmitting an open ID inputted through the web browser to the web service providing apparatus; at the user device, receiving a redirection message from the web service providing apparatus, the redirection message containing authentication information that includes an address of an open ID management apparatus and at least one of open ID authentication information and user authentication authorization information; at the user device, performing user authentication on the basis of a stored password corresponding to the open ID at the security region; and in response to a success in the user authentication, at the user device, transmitting a user authentication success message to the web service providing apparatus through the web browser so as to conduct a login.

In the method, the step of transmitting the open ID may include transmitting a user identification number of the user device to the web service providing apparatus.

In the method, the step of receiving the redirection message may include sending a request for user authentication to the open ID management apparatus when the user authentication authorization information is not contained in the redirection message.

In the method, the step of performing the user authentication may include: determining whether the security region has a password corresponding to the open ID; and if the security region has the password corresponding to the open ID, decrypting the password by using the user identification number so as to perform the user authentication.

In the method, the step of performing the user authentication may include: determining whether the security region has a password corresponding to the open ID; if the security region has no password corresponding to the open ID, sending a request for user authentication to the open ID management apparatus; transmitting a password inputted from a user at the request of the open ID management apparatus to the open ID management apparatus; and if a user authentication success message is received from the open ID management apparatus, encrypting and storing the password at the security region by using the user identification number.

Yet another aspect of the present invention provides an open identification (ID) authentication method based on a trusted platform. The method includes steps of: at a web service providing apparatus, identifying an address of an open ID management apparatus on the basis of an open ID received from a user device; at the web service providing apparatus, inquiring of the open ID management apparatus about authentication for the open ID; at the web service providing apparatus, receiving authentication information, from the open ID management apparatus, that includes at least one of open ID authentication information and user authentication authorization information indicating that user authentication is authorized by the open ID management apparatus; and receiving a redirection message containing the authentication information and the address of the open ID management apparatus to the user device.

Yet another aspect of the present invention provides a computer-readable medium having thereon a program executing steps of: after accessing a web service provided by a web service providing apparatus through a web browser running in the non-security region of a user device, transmitting an open ID inputted through the web browser to the web service providing apparatus; receiving a redirection message from the web service providing apparatus, the redirection message containing authentication information that includes an address of an open ID management apparatus and at least one of open ID authentication information and user authentication authorization information; performing user authentication on the basis of a stored password corresponding to the open ID at the security region; and in response to a success in the user authentication, transmitting a user authentication success message to the web service providing apparatus through the web browser so as to conduct a login.

### Advantageous Effects

According to an open ID authentication method, apparatus and system based on a trusted platform in the present invention, a user device authorized by an open ID management apparatus performs authentication for an open ID, thus preventing in advance network overload caused by repeated data transmission in open ID authentication.

According to an open ID authentication method, apparatus and system based on a trusted platform in the present invention, a user device has a separate environment formed of a non-security region based on an open operating system and a security region based on a security operating system and also allows the security region to stably perform authentication for an open ID without leakage of information.

### Description of the Drawing

FIG. 1 is a schematic diagram illustrating an open ID authentication system based on a trusted platform in accordance with an embodiment of the present invention.
FIG. 2 is a flow diagram illustrating a normal open ID authentication method.
FIG. 3 is a block diagram illustrating a user device in accordance with an embodiment of the present invention.
FIG. 4 is a block diagram illustrating a control unit of a user device in accordance with an embodiment of the present invention.
FIG. 5 is a block diagram illustrating a web service providing apparatus in accordance with an embodiment of the present invention.
FIG. 6 is a flow diagram illustrating an open ID authentication method performed at a user device in accordance with an embodiment of the present invention.
FIG. 7 is a flow diagram illustrating a redirection message creation method for open ID authentication performed at a web service providing apparatus in accordance with an embodiment of the present invention.
FIG. 8 is a flow diagram illustrating an open ID authentication method in accordance with an embodiment of the present invention.

### Mode for Carrying Out the Invention

Hereinafter, a preferred embodiment of the present invention will be described in detail with reference to the accompanying drawings. However, to avoid obscuring the subject matter of the present invention, well known functions or configurations will be omitted from the following descriptions and drawings. Further, the same elements will be designated by the same reference numerals although they are shown in different drawings.

Now, an open ID authentication system based on a trusted platform in embodiments of this invention will be descried.

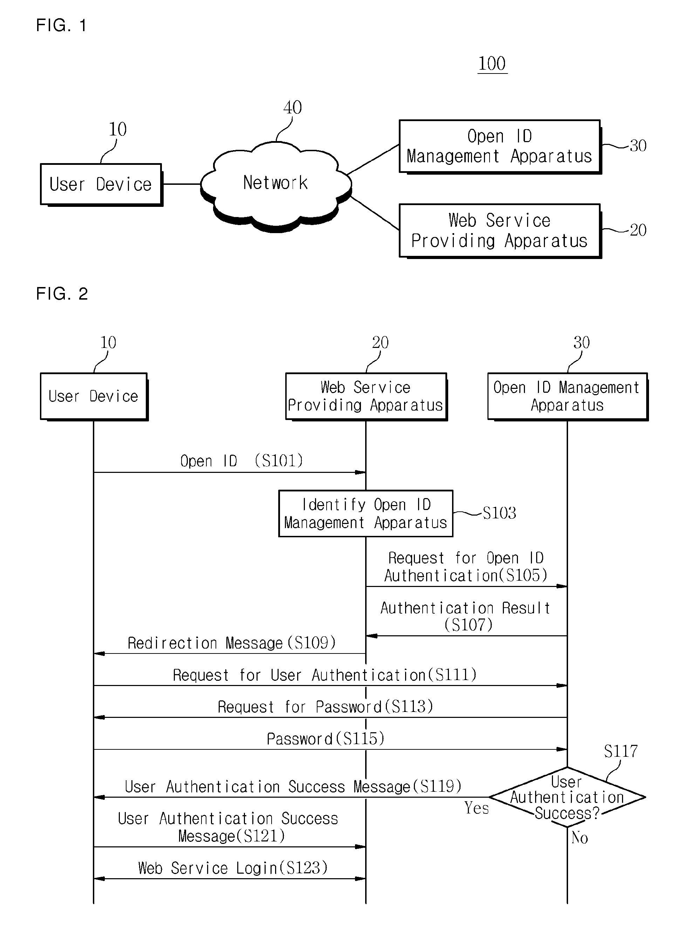

FIG. 1 is a schematic diagram illustrating an open ID authentication system based on a trusted platform in accordance with an embodiment of the present invention.

Referring to FIG. 1, the open ID authentication system 100 includes a user device 10, a web service providing apparatus 20, and an open ID management apparatus 30.

The web service providing apparatus 20 provides a web service, e.g., a shopping, a game, a movie, etc., in response to user's request. Particularly, according to mutual arrangements between the web service providing apparatus 20 and the open ID management apparatus 30, the web service providing apparatus 20 supports a login of the user device 10 in an open ID service procedure.

The open ID management apparatus 30 manages and supports an open ID service procedure. Specifically, upon receipt of user profile information at user's request, the open ID management apparatus 30 issues a user with a particular open ID available for open ID services.

An open ID consists of letters and/or any other special characters. For example, an open ID may take the form of URL composed of three domains. However, this is exemplary only and not to be considered as a limitation. Alternatively, any other form supported by the open ID management apparatus 30 may be used for an open ID.

If a user profile that has a password associated with an open ID is received from a user, the open ID management apparatus 30 issues a particular open ID (e.g., http://iphl.openid.com) to the user device 10. Then, using this open ID, the user device 10 performs a login process for a selected website which uses an open ID service according to mutual arrangements with the open ID management apparatus 30.

Now, a normal method for authenticating an open ID will be described with reference to FIG. 2.

FIG. 2 is a flow diagram illustrating a normal open ID authentication method.

Referring to FIG. 2, at step S101, a user of the user device 10 accesses, through a web browser, a specific web service (e.g., a website, www.skplanet.co.kr) which provides a login of the user device 10 in an open ID service procedure provided by the web service providing apparatus 20. Then the user device 10 tries a login by entering, in an address bar, an open ID such as URL (e.g., http://iphl.openid.com) issued by the open ID management apparatus 30.

At step S103, the web service providing apparatus 20 identifies an address of the open ID management apparatus 30 on the basis of user's open ID (namely, http://iphl.openid.com) received from the user device 10. The address of the open ID management apparatus 30 may be identified from URL. For example, "openid.com" contained in URL of the open ID given above may be a domain of the open ID management apparatus 30. In this case, the address of the open ID management apparatus 30 may be identified as an IP address stored previously in accordance with the above domain.

After the address of the open ID management apparatus 30 is identified, at step S105, the web service providing apparatus 20 transmits the open ID to the open ID management apparatus 30 and also requests authentication of the open ID.

At step S107, the open ID management apparatus 30 creates open ID authentication information that indicates that the open ID received from the user device 10 has been issued validly. Then the open ID management apparatus 30 transmits the open ID authentication information to the web service providing apparatus 20. At step S109, the web service providing apparatus 20 transmits, to the user device 10, a redirection message containing the address of the open ID management apparatus 30 and the open ID authentication information.

At step S111, the user device 10 requests a user authentication from the open ID management apparatus 30 by transmitting the open ID to the open ID management apparatus 30 corresponding to the received address.

At step S113, the open ID management apparatus 30 requests the user device 10 to display a password input window through a web browser. At step S115, the user device 10 receives a password input from a user through the password input window and then transmits the received password to the open ID management apparatus 30. At step S117, based on the password received from the user device 10, the open ID management apparatus 30 performs user authentication of the user device 10.

Namely, at step S117, the open ID management apparatus 30 compares the received password with a password registered previously when the open ID has been issued. If the received password is identical to the registered password, the open ID management apparatus 30 creates a user authentication success message and transmits it to the user device 10 at step S119.

The user authentication success message may contain the open ID authentication information used in step S107. At step S121, the user device 10 transmits the user authentication success message containing the open ID authentication information to the web service providing apparatus 20. Then, at step S123, the web service providing apparatus 20 checks the open ID authentication information contained in the user authentication success message, verifies that the open ID inputted from the user device 10 has been authenticated by the open ID management apparatus 30, and permits a login of the user device 10. Therefore, the user device 10 can use a web service provided by the web service providing apparatus 20.

In the-above discussed normal open ID authentication method, by using a unified ID, a user can easily conduct a login to a website that provides open ID services. However, this method may often cause network overload due to repeated data transmission for a login between the web service providing apparatus 20 and the open ID management apparatus 30. Particularly, such repeated data transmission may result in waste of wireless resources in a wireless communication environment.

In order to solve this problem, in the user device 10 that has a separate environment formed of a non-security region based on an open operating system and a security region based on a security operating system, this invention provides a technique to perform authentication for an open ID at the security region of the user device 10 which is authorized to authenticate an open ID by the open ID management apparatus 30.

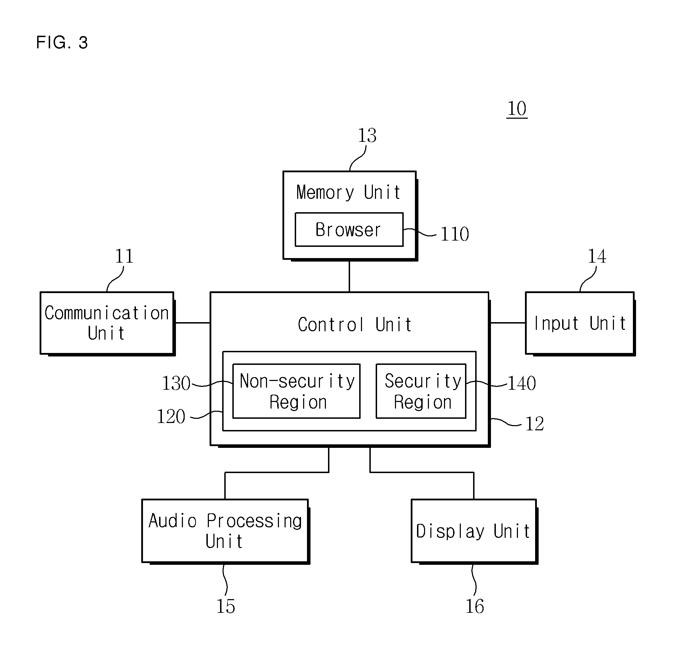

Now, an open ID authentication method performed at the user device will be described in detail with reference to FIGS. 3 to 8.

As mentioned above, the user device 10 has a separate environment formed of a non-security region based on an open operating system and a security region based on a security operating system. Also, the user device 10 has an ability to communicate with the web service providing apparatus 20 and the open ID management apparatus 30 through the communication network 40.

The user device 10 may be realized in a great variety of forms. For example, the user device 10 may be any kind of mobile terminal such as a smart phone, a tablet PC, a personal digital assistant (PDA), a portable multimedia player (PMP), or an MP3 player. Alternatively, the user device 10 may be a stationary terminal such as a smart TV or a desktop PC, or any other device inherently having a communication function.

The communication network 40 may employ at least one of various communication networks including wireless networks such as WLAN (wireless LAN), Wi-Fi, Wibro, Wimax, or HSDPA (high speed downlink packet access), and wired networks such as Ethernet, xDSL (i.e., ADSL or VDSL), HFC (hybrid fiber coaxial), FTTC (fiber to the curb), or FTTH (fiber to the home). Additionally, any other well known networks or further networks under development or investigation may be adopted as the communication network 40.

Hereinbefore, main elements of the open ID system 100 in embodiments of this invention have been broadly described.

Now, configuration and operation of the user device in embodiments of this invention will be described in detail.

FIG. 3 is a block diagram illustrating a user device in accordance with an embodiment of the present invention.

Referring to FIG. 3, the user device 10 includes a communication unit 11, a control unit 12, a memory unit 13, an input unit 14, an audio processing unit 15, and a display unit 16.

In embodiments of this invention, the user device 10 has a separate environment which is realized through the control unit 12 and is formed of a non-security region 130 operating based on a normal open operating system and a security region 140 operating based on a separate security operating system. This separate environment may be realized physically or logically.

In this environment, after receiving authorization for user authentication from the open ID management apparatus 30 that provides open ID services, the user device 10 receives a password corresponding to an open ID from a user or a password from the open ID management apparatus 30, encrypts the received password on the basis of a user identification number, and then stores the encrypted password in the security region. Thereafter, when a login process is performed at a user's request, the user device 10 retrieves the encrypted password from the security region, and decrypts the retrieved password on the basis of a user identification number. If decryption is completed, the user device 10 regards it as a success in user authentication for a login to a web service.

Detailed operations of respective elements are as follows.

The communication unit 11 may have at least one communication module so as to establish various communication channels with the web service providing apparatus 20 and the open ID management apparatus 30 through the communication network 40.

The communication unit 11 may be operable in a wireless or wired manner.

The control unit 12 performs a general control of the user device 10. Particularly, as mentioned above, the control unit 12 may have a separate environment, e.g., a trusted platform 120, which is formed of the non-security region based on an open operating system and the security region based on a security operating system.

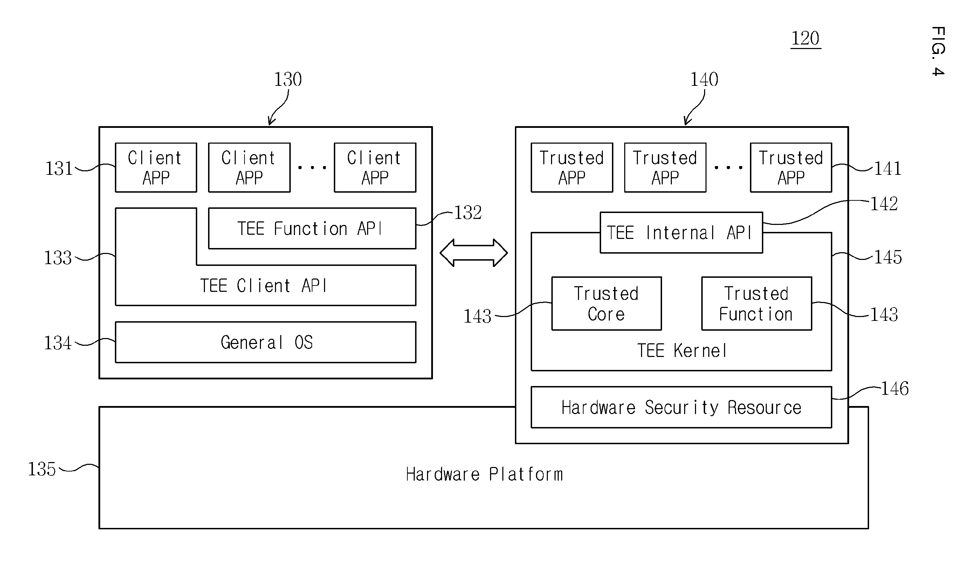

Now, the control unit 12 will be described in detail with reference to FIG. 4.

FIG. 4 is a block diagram illustrating a control unit of a user device in accordance with an embodiment of the present invention.

Referring to FIG. 4, the control unit 12 may be composed of the non-security region 130, the security region 140, and a hardware platform 135.

The non-security region 130 may include an open operating system (OS) for user functions that do not require encrypted information. The non-security region 130 may control the execution of a particular user function according to an input signal received from the input unit 14 or from the display unit 16 having a touch screen function. For example, if an input signal for activating a camera function is received, the non-security region 130 may control related functions such as a camera activation, an image capture, an image save, and the like. Particularly, the non-security region 130 operates under the control of the control unit 12 such that various kinds of information inputted through the input unit 14 to invoke a web browser for access to web services or to conduct a login for a selected web service through the web browser can be transmitted to the web service providing apparatus 20 and the open ID management apparatus 30 through the communication unit 11. Also, the non-security region 130 performs a function to deliver received information to the security region 140 under the control of the control unit 12.

As shown in FIG. 4, the non-security region 130 may include an application layer 131, a TEE function API layer 132, a TEE client API layer 133, and a general OS layer 134.

In contrast, the security region 140 performs a function to provide stored and encrypted information to the control unit 12 in response to a call of the non-security region 130. For example, if the non-security region 130 requires encrypted information for a purchase of a music file in a music play function, the security region 140 may be called by the non-security region 130. In this process, the non-security region 130 may deliver call information about the required encrypted information to the security region 140. Particularly, the security region 140 encrypts and stores a password corresponding to an open ID and delivered through the non-security region 130 on the basis of a user identification number. Thereafter, when a user identification number is received from the non-security region 130 at the request of a web browser running in the non-security region 130, the security region 140 checks whether the received user identification number is equal to that used in encryption. If so, the security region 140 decrypts the stored password on the basis of the user identification number and then delivers it to the non-security region 130. When the decrypted password is received, a web browser of the non-security region 130 regards it as a success in user authentication, creates a user authentication success message, and transmits the user authentication success message to the web service providing apparatus 20 through the communication unit 11.

As shown in FIG. 4, the security region 140 may include a trusted application layer 141, a TEE internal API layer 142, a trusted core environment layer 143, a trusted function layer 144, and a hardware security resource layer 146. Here, the TEE internal API layer 142, the trusted core environment layer 143, and the trusted function layer 144 may be disposed on a TEE kernel layer 145, and the hardware security resource layer 146 may be disposed on the hardware platform 135.

In this control unit 12 based on the above-discussed trusted platform, if there is a request for a password encrypted and stored in the security region 140 while the TEE client API layer 133 performs a specific user function through the application layer 131, namely, while a web browser is running, the TEE function API layer 132 delivers a relevant call to the TEE client API layer 133. Then the TEE client API layer 133 requests a password encrypted, stored and required for a security function through a message communication with the TEE internal API layer 142. At this time, a user identification number is also delivered. Then the TEE internal API layer 142 collects encrypted passwords stored in a hardware security resource through the trusted function layer 144, and decrypts the collected passwords on the basis of a user identification number accredited by the non-security region 130. If the user identification number accredited by the non-security region 130 is not equal to that used in encryption, the TEE internal API layer 142 notifies the TEE client API layer 133 of a failure in user authentication.

However, if decryption succeeds on the basis of the accredited user identification number, the TEE internal API layer 142 may notify a success in user authentication by sending a decrypted password to the TEE client API layer 133.

In summary, if the non-security region 130 calls an encrypted password stored in the hardware secure resource layer 146 that is accessible only through the trusted platform 120 located in the security region 140, the security region 140 decrypts the encrypted password on the basis of a user identification number accredited by the non-security region 130 and then returns decryption results to the non-security region 130.

In this process, the trusted function layer 144 may double-checks a user identification number predefined for securing the reliability of a call for encrypted information, and the non-security region 130 may support the display unit 16 to display a user identification number input screen for a double-checking process through a web browser.

If a user identification number is properly provided to the security region 140, and if decryption is completed, the decrypted password is delivered to the non-security region 130. Alternatively, the security region 140 may be temporarily authorized to perform various functions required in a password decryption process for open ID authentication by the non-security region 130, and then directly control data communication with the web service providing apparatus 20 and the open ID management apparatus 30 through a direct control of the communication unit 11.

Hereinbefore, the control unit 12 has been described in detail with reference to FIG. 4.

Now, other elements shown in FIG. 3, namely, the memory unit 13, the input unit 14, the audio processing unit 15, and the display unit 16 will be described.

The memory unit 13 stores programs required for a control of the user device 10 and data created during execution of such programs. Particularly, the memory unit 13 may store a web browser 110 for access to a website provided by the web service providing apparatus 20. The user device 10 may offer an icon or menu item for activating the web browser 110. In response to a selection of the icon or menu item, the web browser 110 is loaded on the control unit 12 and supports various functions for access to a website. Particularly, the web browser 110 may support transmission or reception of information associated with an authentication process such as an input of an open ID or an input of a password, and may also temporarily or permanently store such information.

Also, the memory unit 13 may further store a user identification number which refers to any kind of information used for identifying the user device 10. For example, in case of a mobile communication terminal, a user's unique number allocated by a mobile communication operator or a mobile identification number (MIN) may be used as a user identification number. In case of a stationary terminal connected to a network, an IP address may be used as a user identification number. This is, however, exemplary only and not to be considered as a limitation.

The memory unit 13 may be formed of at least one of a flash memory, a hard disk, a multimedia card micro type memory (e.g., SD or XD memory), RAM, and ROM.

The input unit 14 receives an input of various numbers, letters, and other keys, creates an input signal for performing or controlling various functions of the user device 10, and delivers it to the control unit 12. Particularly, the input unit 14 receives user's input for driving a web browser and also transmits, to the control unit 12, an open ID or a password inputted through an address bar of the web browser or any other input window from a user.

The input unit 14 may have at least one of a keypad and a touch pad which creates an input signal in response to user's touch or other manipulating actions. In some embodiments, together with the display unit 16 to be described below, the input unit 14 may be formed of a touch panel (or a touch screen) capable of performing both input and display functions. Additionally, the input unit 14 may have at least one of a key input unit such as a keyboard or a keypad, a touch input unit such as a touch sensor or a touch pad, a gesture input unit such as a gyro sensor, a geomagnetic sensor, an acceleration sensor, a proximity sensor or a camera, and a voice input unit. Besides, any other input device under development or investigation may be adopted as the input unit.

The audio processing unit 15 converts an electrical sound signal into an analog signal. Particularly, the audio processing unit 15 may output a specific sound in case of a failure in user authentication.

The display unit 16 visually offers information associated with operating states and results while the user device 10 performs its function. Particularly, the display unit 16 may display information offered through a web browser and also represent a specific screen for receiving an input of open ID and password. The display unit 16 may be formed of LCD (liquid crystal display), TFT-LCD (thin film transistor LCD), OLED (organic light emitting diodes), LED, AMOLED (active matrix OLED), flexible display, three-dimensional display, or the like.

Although main elements of the user device 10 are described hereinbefore with reference to FIG. 3, all of these elements are not always essential. In some embodiments, some of them may be removed from the user device 10, and any other elements may be additionally or alternatively used for the user device 10.

Now, configuration and operation of the web service providing apparatus 20 in embodiments of this invention will be described in detail.

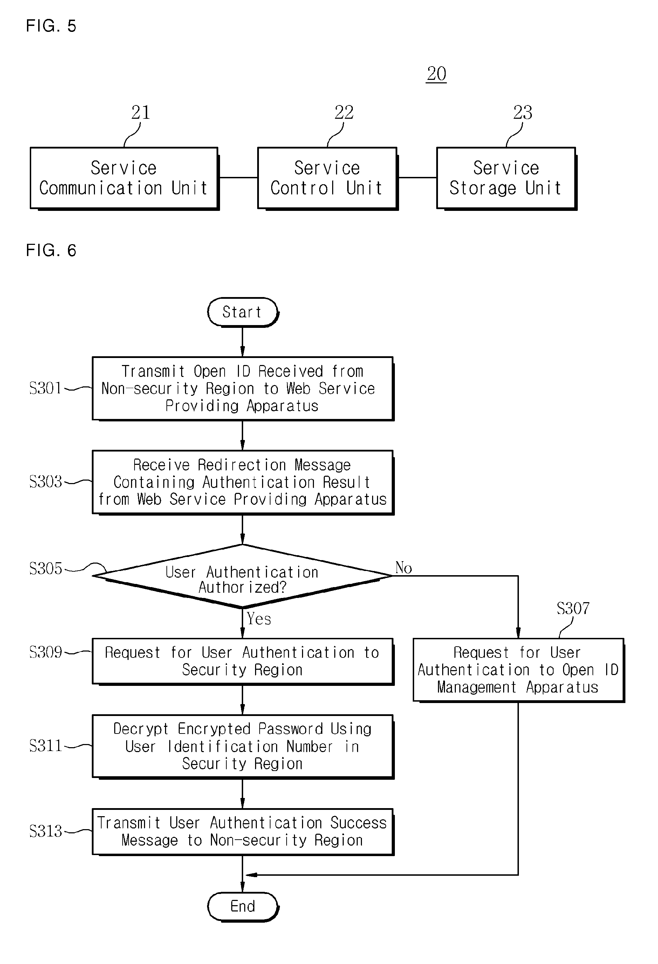

FIG. 5 is a block diagram illustrating a web service providing apparatus in accordance with an embodiment of the present invention.

Referring to FIGS. 1 and 5, the web service providing apparatus 20 includes a service communication unit 12, a service control unit 22, and a service storage unit 23.

The service communication unit 21 performs a communication with the open ID management apparatus 30 and at least one user device 10. Particularly, the service communication unit 21 communicates with the non-security region based on an open operating system through the communication unit of the user device 10.

Normally the user device 10 operates based on an open operating system. However, as discussed above, the user device 10 in embodiments of this invention has a separate environment formed of the non-security region operating based on an open operating system and the security region operating based on a separate security operating system. The service communication unit 21 receives information from the non-security region of the user device 10 and then delivers it to the service control unit 22 to be described below.

The service control unit 22 controls the whole procedure of providing a specific web service, e.g., game, news, movie, portal, etc., to the user device 10. The service control unit 22 may control a login process of the user device 10 that intends to use a web service.

Specifically, the service control unit 22 controls the entire login process of the user device 10 by using an open ID service supported by the open ID management apparatus 30. Namely, when an open ID inputted through the user device 10 from a web browser operating in the non-security region of the user device 10 is received, the service control unit 22 identifies, based on the received open ID, an address of the open ID management apparatus 30 that has issued the open ID.

For example, if an open ID received from a web browser operating in the non-security region of the user device 10 is http://iphl.openid.com, "iphl" is user's open ID identifier and "openid.com" is a domain of the open ID management apparatus 30 that issues the open ID.

Therefore, the service control unit 22 identifies a domain of the open ID management apparatus 30 from the received open ID, identifies an IP address of the open ID management apparatus 30 corresponding to the domain and stored previously, and then inquires of the open ID management apparatus 30 about authentication for the open ID received from the user device 10.

Namely, the service control unit 22 inquires whether the open ID received from the user device 10 is a valid open ID issued by the open ID management apparatus 30. Additionally, based on a user identification number received together with an open ID from the user device 10, the service control unit 22 may inquire whether there is information about authorization for user authentication.

If the result of authentication is received from the open ID management apparatus 30, the service control unit 22 transmits a redirection message containing the received authentication result and the address of the open ID management apparatus 30 to the user device 10 through the service communication unit 21.

Thereafter, if a user authentication success message is received from a web browser running in the non-security region of the user device 10, the service control unit 22 permits a login of the user device 10.

For this, the web service providing apparatus 20 may include the service storage unit 23 that stores contents associated with web services provided by the web service providing apparatus 20.

The service storage unit 23 stores and manages general information for providing web services to the user device 10. Particularly, the service storage unit 23 stores the address of the open ID management apparatus 30 by matching it to a domain.

As discussed so far, the web service providing apparatus 20 stores, in the service storage unit 23, and manages only information about the open ID management apparatus 30 instead of information required for user authentication of the user device 10. This allows a simpler construction of system. Further, it is possible to stably support a login of the user device 10 without security threat since a login is permitted only for the user device 10 transmitting a user authentication success message.

The web service providing apparatus 20 and the open ID management apparatus 30 may be constructed as one or more servers that operate in a server-based computing configuration or a cloud configuration. Particularly, in embodiments of this invention, information transmitted or received through the open ID authentication system may be provided through a cloud computing function that may be permanently stored in a cloud computing device on Internet. A cloud computing refers to a technique to offer on-demand IT (information technology) resources such as hardware (i.e., server, storage, network, etc.), software (i.e., database, security, web, etc.), service and data, virtualized using Internet technology, to any digital device such as a desktop, a tablet computer, a notebook, a netbook, and a smart phone. In this invention, all kinds of information transmitted or received among the user device 10, the web service providing apparatus 20 and the open ID management apparatus 30 may be stored in a cloud computing device on Internet and also transmitted anytime and anywhere.

Now, an open ID authentication method in embodiments of this invention will be described in detail.

FIG. 6 is a flow diagram illustrating an open ID authentication method performed at a user device in accordance with an embodiment of the present invention.

Referring to FIGS. 1 and 6, at step S301, when a user accesses a web service provided by the web service providing apparatus 20 through a web browser running in the non-security region of the user device 10 and then inputs an open ID for a login of the web service, the user device 10 transmits the open ID to the web service providing apparatus 20.

At step S303, the user device 10 receives a redirection message containing the result of authentication from the web service providing apparatus 20.

This authentication result refers to authentication information that includes open ID authentication information indicating whether the open ID inputted by a user has been issued validly and user authentication authorization information indicating that user authentication is authorized by the open ID management apparatus 30. A web browser running in the non-security region receives a redirection message that contains this authentication information and the address of the open ID management apparatus 30.

At step S305, the web browser determines whether the received redirection message contains authorization information about user authentication. If there is no authorization information, the web browser sends a request for user authentication to the open ID management apparatus 30 at step S307. If there is authorization information, the web browser sends a request for user authentication to the security region at step S309.

Thereafter, a specific API performing user authentication in the security region, e.g., the TEE internal API 142 discussed above with reference to FIG. 4, checks whether there is a password, corresponding to the open ID, encrypted on the basis of a user identification number. If there is an encrypted password, the TEE internal API 142 decrypts the encrypted password by using a user identification number at step S311.

If decryption is performed properly, the TEE internal API 142 transmits a user authentication success message to a web browser running in the non-security region at step S313. Then the web browser sends it to the web service providing apparatus 20 to perform a login.

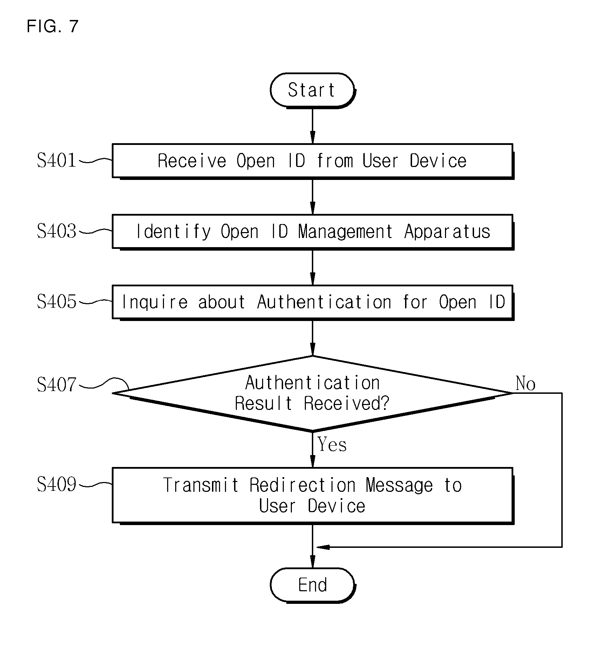

Now, operation of the web service providing apparatus 20 in embodiments of this invention will be described in detail with reference to FIG. 7.

FIG. 7 is a flow diagram illustrating a redirection message creation method for open ID authentication performed at a web service providing apparatus in accordance with an embodiment of the present invention.

Referring to FIGS. 1 and 7, the web service providing apparatus 20 receives an open ID from the user device 10 at step S401, and then identifies the address of the open ID management apparatus 30 on the basis of the received open ID at step S403.

At step S405, the web service providing apparatus 20 inquires of the open ID management apparatus 30, corresponding to the identified address, about authentication for the open ID. If the result of authentication is received from the open ID management apparatus 30 at step S407, the web service providing apparatus 20 transmits a redirection message containing the authentication result to the user device at step S409.

As discussed above, the authentication result is authentication information that includes open ID authentication information indicating whether the open ID received from the user device 10 has been issued validly by the open ID management apparatus 30, and user authentication authorization information indicating that user authentication is authorized by the open ID management apparatus 30. When this authentication information is received from the open ID management apparatus 30, the web service providing apparatus 20 creates a redirection message containing the received authentication information and the address of the open ID management apparatus 30 identified at step S403 and then transmits it to the user device 10.

If the authentication result is not received properly at step S407, the web service providing apparatus 20 may transmit a message indicating a failure in authentication to the user device 10.

Now, an open ID authentication method in embodiments of this invention will be described in detail.

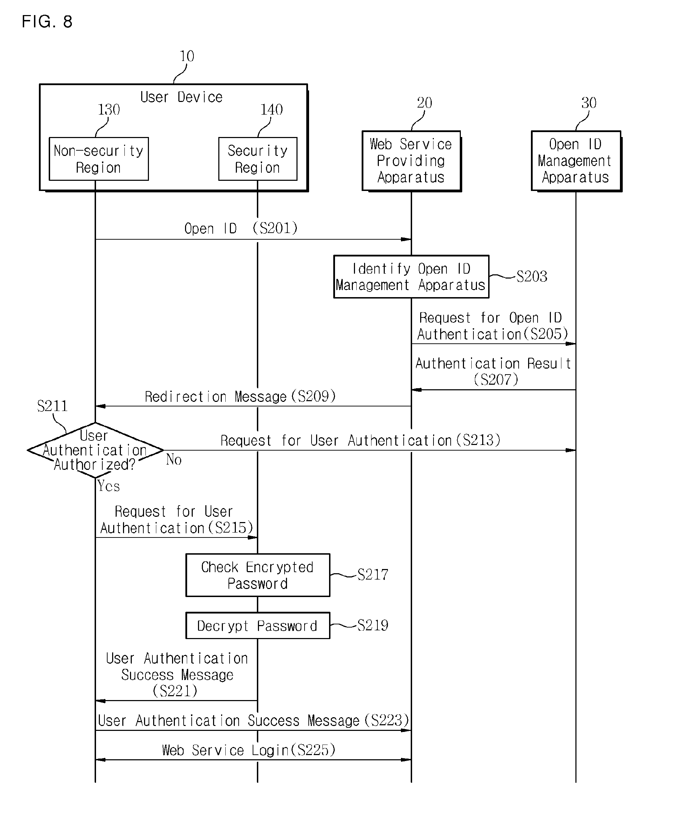

FIG. 8 is a flow diagram illustrating an open ID authentication method in accordance with an embodiment of the present invention.

Referring to FIG. 8, at step S201, when a user accesses a web service provided by the web service providing apparatus 20 through a web browser running in the non-security region 130 of the user device 10 and then inputs an open ID for a login of the web service through the web browser, the user device 10 transmits the open ID to the web service providing apparatus 20.

For example, a user accesses a website, www.skplanet.co.kr, so as to use a specific web service provided by the web service providing apparatus 20, and then tries a login by entering an open ID, e.g., http://iphl.openid.com, issued previously by the open ID management apparatus 30 in an address bar of a web browser.

Thereafter, at step S203, the web service providing apparatus 20 identifies an address of the open ID management apparatus 30 on the basis of user's open ID, i.e., http://iphl.openid.com, received from the user device 10. The address of the open ID management apparatus 30 may be identified from URL. For example, "openid.com" contained in URL of the above open ID may be a domain of the open ID management apparatus 30, and the address of the open ID management apparatus 30 may be identified as an IP address stored previously in accordance with the above domain.

After the address of the open ID management apparatus 30 is identified, at step S205, the web service providing apparatus 20 transmits the open ID inputted from the user device 10 to the open ID management apparatus 30 and also inquires whether the open ID has been issued validly by the open ID management apparatus 30.

At step S207, the open ID management apparatus 30 creates open ID authentication information that indicates that the open ID received from the user device 10 has been issued validly. Then the open ID management apparatus 30 transmits the open ID authentication information to the web service providing apparatus 20.

Meanwhile, at step S201, the user device 10 may further transmit a user identification number to the web service providing apparatus 20. Then the web service providing apparatus 20 transmits the received user identification number to the open ID management apparatus 30, which determines based on the user identification number whether to give authorization for user authentication to the user device 10.

For example, in case where the user device 10 is a mobile communication terminal and uses, as a user identification number, a unique number allocated by a mobile communication operator, the open ID management apparatus 30 may inquire of, based on the user identification number, a service server of the mobile communication operator whether to guarantee the user device 10. In this case, the service server of the mobile communication operator may store previously information about whether the user device 10 has a trusted platform. If the user device 10 has a trusted platform with enhanced security, the service server of the mobile communication operator may create information indicating a guarantee of the user device 10 and then transmit it to the open ID management apparatus 30. Then the open ID management apparatus 30 may transmit, to the user device 10 through the web service providing apparatus 20, user authentication authorization information indicating that user authentication is authorized by the open ID management apparatus 30.

After the open ID management apparatus 30 transmits to the web service providing apparatus 20 the above-discussed user authentication authorization information and the open ID authentication information indicating that the open ID received from the user device 10 has been issued validly, the web service providing apparatus 20 transmits to a web browser of the user device 10 a redirection message containing the received authentication information and the address of the open ID management apparatus 30 at step S209.

At step S211, a web browser running in the non-security region 130 determines whether the received redirection message contains authorization information about user authentication. If there is no authorization information, the web browser sends, based on the received address of the open ID management apparatus 30, a request for user authentication to the open ID management apparatus 30 at step S213. Subsequent steps are identical to those discussed above in FIG. 2.

If there is authorization information, the web browser running in the non-security region 130 sends a request for user authentication to the security region 140 at step S215. Namely, the web browser calls an encrypted password.

Thereafter, as discussed above in FIG. 4, the TEE internal API 142 running in the security region 140 checks at step S217 whether a password called by the web browser is stored in an area managed by the security region 140. If so, the TEE internal API 142 performs at step S219 decryption based on a user identification number received through the web browser.

If a user identification number received through a web browser is not identical to that used in encryption of a password, this is regarded as a failure in user authentication. If identical and if decryption is performed properly, this is regarded as a success in user authentication. In case of a success, the security region 140 transmits a user authentication success message to a web browser of the non-security region 130 at step S221. Then the web browser of the non-security region 130 transmits the received user authentication success message to the web service providing apparatus 20 at step S223.

The user authentication success message contains the open ID authentication information received in step S207. Since the open ID inputted through the user device 10 is guaranteed by the open ID management apparatus 30, the web service providing apparatus 20 permits a login of the user device 10 without security threat at step S225.

If there is no password corresponding to the open ID at step s217, the user device 10 may send a request for user authentication to the open ID management apparatus 30. Thereafter, when a user authentication success message is received from the open ID management apparatus 30, the user device 10 may encrypt a password inputted through a web browser of the non-secure region 130 by using a user identification number and then store it in the secure region 140.

As discussed above, once a password corresponding to an open ID is stored in the security region 140, the user device 10 directly calls the password from the security region 140 and then performs user authentication without a need to transmit or receive information to or from the web service providing apparatus 20 and the open ID management apparatus 30.

As such, open ID authentication through the security region 140 of the user device 10 can prevent in advance network overload caused by repeated data transmission in typical open ID authentication.

Additionally, the user device 10 has a separate environment formed of the non-security region 130 based on an open operating system and the security region 140 based on a security operating system and also allows the security region 140 to stably perform authentication for an open ID without leakage of user information.

Hereinbefore, the open ID authentication method based on a trusted platform in embodiments of this invention has been described.

The open ID authentication method in embodiments of this invention may be implemented as program commands that can be executed by various computer means and written to a computer-readable recording medium. The computer-readable recording medium may include a program command, a data file, a data structure, etc. alone or in combination. The program commands written to the medium are designed or configured especially for the disclosure, or known to those skilled in computer software. Examples of the computer-readable recording medium include magnetic media such as a hard disk, a floppy disk, and a magnetic tape, optical media such as a CD-ROM and a DVD, magneto-optical media such as a floptical disk, and a hardware device configured especially to store and execute a program command, such as a ROM, a RAM, and a flash memory.

The computer-readable recording medium can be distributed over a plurality of computer systems connected to a network so that processor-readable code is written thereto and executed therefrom in a decentralized manner. Programs, code, and code segments to realize the embodiments herein can be construed by one of ordinary skill in the art.

While this invention has been particularly shown and described with reference to an exemplary embodiment thereof, it will be understood by those skilled in the art that various changes in form and details may be made therein without departing from the subject matter of the invention. Specific terms used in this disclosure and drawings are used for illustrative purposes and not to be considered as a limitation of the present invention.

### Industrial Applicability

The present invention relates generally to open identification (ID) authentication technology and, more particularly, to a method, an apparatus and a system for authenticating an open ID based on a trusted platform so as to prevent network overload which may occur due to data transmission repeated at every time of open ID authentication.

According to an open ID authentication method, apparatus and system based on a trusted platform in the present invention, a user device has a separate environment formed of a non-security region based on an open operating system and a security region based on a security operating system and also allows the security region to stably perform authentication for an open ID without leakage of information. This contributes greatly to the development of security industry and web service industry, thus having industrial applicability.

## Claims

1. An open identification (ID) authentication system comprising:
a web service providing apparatus configured to provide a specific web service and to support a login of a user device in an open ID service procedure according to mutual arrangements with an open ID management apparatus; and
the user device configured to have a separate environment formed of a non-security region operating based on an open operating system and a security region operating based on a security operating system, to access the web service provided by the web service providing apparatus through a web browser running in the non-security region, to transmit an open ID inputted through the web browser to the web service providing apparatus, to perform user authentication on the basis of a stored password corresponding to the open ID at the security region when a redirection message is received from the web service providing apparatus, and to transmit a user authentication success message to the web service providing apparatus through the web browser so as to conduct a login.

2. A user device comprising:
a communication unit configured to transmit or receive information through a communication network; and
a control unit configured to have a separate environment formed of a non-security region operating based on an open operating system and a security region operating based on a security operating system, to access a web service provided by a web service providing apparatus through a web browser running in the non-security region, to transmit an open ID inputted through the web browser to the web service providing apparatus, to perform user authentication on the basis of a stored password corresponding to the open ID at the security region when a redirection message is received from the web service providing apparatus, and to transmit a user authentication success message to the web service providing apparatus through the web browser so as to conduct a login.

3. The user device of claim 2, wherein the control unit is further configured to transmit a user identification number of the user device to the web service providing apparatus when transmitting the open ID.

4. The user device of claim 2, wherein the redirection message contains authentication information that includes an address of an open ID management apparatus and at least one of open ID authentication information and user authentication authorization information, the open ID authentication information indicating whether the open ID is issued by the open ID management apparatus, and the user authentication authorization information indicating that user authentication is authorized by the open ID management apparatus.

5. The user device of claim 3, wherein the control unit is further configured, if the security region has a stored password corresponding to the open ID, to decrypt the password by using the user identification number so as to perform the user authentication.

6. The user device of claim 3, wherein the control unit is further configured, if the security region has no stored password corresponding to the open ID, to send a request for user authentication to the open ID management apparatus, to transmit a password inputted from a user at the request of the open ID management apparatus to the open ID management apparatus, and if a user authentication success message is received from the open ID management apparatus, to encrypt and store the password at the security region by using the user identification number.

7. A web service providing apparatus comprising:
a service communication unit configured to communicate with an open ID management apparatus and at least one user device, the open ID management apparatus supporting an open ID service, and the user device having a separate environment formed of a non-security region operating based on an open operating system and a security region operating based on a security operating system; and
a service control unit configured to identify an address of the open ID management apparatus on the basis of an open ID when the open ID is received from the non-security region of the user device, to inquire of the open ID management apparatus about authentication for the open ID, to transmit a redirection message containing authentication information and the address of the open ID management apparatus to the non-security region of the user device when the authentication information is received as the result of the authentication from the open ID management apparatus, and to permit a login of the user device when a user authentication success message is received from the non-security region of the user device.

8. An open identification (ID) authentication method based on a trusted platform, the method comprising steps of:
at a user device, after accessing a web service provided by a web service providing apparatus through a web browser running in the non-security region, transmitting an open ID inputted through the web browser to the web service providing apparatus;
at the user device, receiving a redirection message from the web service providing apparatus, the redirection message containing authentication information that includes an address of an open ID management apparatus and at least one of open ID authentication information and user authentication authorization information;
at the user device, performing user authentication on the basis of a stored password corresponding to the open ID at the security region; and
in response to a success in the user authentication, at the user device, transmitting a user authentication success message to the web service providing apparatus through the web browser so as to conduct a login.

9. The method of claim 8, wherein the step of transmitting the open ID includes transmitting a user identification number of the user device to the web service providing apparatus.

10. The method of claim 8, wherein the step of receiving the redirection message includes sending a request for user authentication to the open ID management apparatus when the user authentication authorization information is not contained in the redirection message.

11. The method of claim 8, wherein the step of performing the user authentication includes:
determining whether the security region has a password corresponding to the open ID; and
if the security region has the password corresponding to the open ID, decrypting the password by using the user identification number so as to perform the user authentication.

12. The method of claim 8, wherein the step of performing the user authentication includes:
determining whether the security region has a password corresponding to the open ID;
if the security region has no password corresponding to the open ID, sending a request for user authentication to the open ID management apparatus;
transmitting a password inputted from a user at the request of the open ID management apparatus to the open ID management apparatus; and
if a user authentication success message is received from the open ID management apparatus, encrypting and storing the password at the security region by using the user identification number.

13. An open identification (ID) authentication method based on a trusted platform, the method comprising steps of:
at a web service providing apparatus, identifying an address of an open ID management apparatus on the basis of an open ID received from a user device;
at the web service providing apparatus, inquiring of the open ID management apparatus about authentication for the open ID;
at the web service providing apparatus, receiving authentication information, from the open ID management apparatus, that includes at least one of open ID authentication information and user authentication authorization information indicating that user authentication is authorized by the open ID management apparatus; and
receiving a redirection message containing the authentication information and the address of the open ID management apparatus to the user device.

14. A computer-readable medium having thereon a program executing steps of:
after accessing a web service provided by a web service providing apparatus through a web browser running in the non-security region of a user device, transmitting an open ID inputted through the web browser to the web service providing apparatus;
receiving a redirection message from the web service providing apparatus, the redirection message containing authentication information that includes an address of an open ID management apparatus and at least one of open ID authentication information and user authentication authorization information;
performing user authentication on the basis of a stored password corresponding to the open ID at the security region; and
in response to a success in the user authentication, transmitting a user authentication success message to the web service providing apparatus through the web browser so as to conduct a login.
